# EUROPEAN PATENT APPLICATION

(11) **EP 2 587 827 A1**
(43) Date of publication of application: **01.05.2013**
(21) Application number: 11187260.2
(22) Date of filing: 31.10.2011
(51) Int. Cl.: H04N 21/437, H04N 21/258, H04N 21/266, H04N 21/6377, H04N 21/61

(54) **Method and hybrid multimedia unit for descrambling a digital broadcast transport stream**

(71) Applicant: Nagravision S.A., 1033 Cheseaux-sur-Lausanne (CH)
(72) Inventor: Wendling, Bertrand, 1180 Rolle (CH)
(74) Representative: Leman Consulting S.A.

(57) **Abstract**

Method to descramble a digital broadcast transport stream (10) received, from a broadcaster (20) through a satellite, terrestrial or cable network (55), by an hybrid multimedia unit (30) connectable to a server (40) through an IP-connection (45) provided with a return path (43). The transport stream (10) comprising scrambled content packets (15) and conditional access messages (12).The method comprising the steps of:
- authentication of the multimedia unit (30) by the server (40), if the authentication fails, then prevent any further processing by the server (40) of conditional access messages (12) coming from any unauthenticated multimedia unit,
- establishing a secure session between the authenticated multimedia unit (30) and the server (40) for transferring data,
- sending said conditional access messages (12) from the authenticated multimedia unit to the server through said return path (43) without having previously extracted said control data (13),
- verifying the validity of access rights allocated to the multimedia unit,
- extracting the control data (13) from the conditional access messages (12) by the server (40),
- sending the control data (13) from the server (40) towards the authenticated multimedia unit (30) through said IP-connection (45) under said secured session,
- using the control data (13) by the authenticated multimedia unit (40) in order to descramble the content packets (15).

## Description

### TECHNICAL FIELD

The present invention relates to reception of multimedia data such as encrypted TV events for Pay-TV systems. More particularly, the invention relates to a method and a hybrid multimedia unit, such a set-top-box or a mobile device, for descrambling a digital transport stream received from a broadcaster through a satellite, terrestrial, handheld or cable network. The hybrid feature of this multimedia unit defines that it is connectable on the one hand to a server through an IP-connection provided with a return path in order to receive events broadcasted via Internet means (e.g. IPTV) and on the other hand via at least one another means, for instance satellite (SAT), cable (CATV), terrestrial (DTT) or handheld means (Mobile) means.

### BACKGROUND

A digital transport stream typically comprises scrambled audio/video/data content packets and scrambled conditional access messages (ECM, EMM) which have to be processed in order to extract control data (CW); the latter being necessary for the multimedia unit to descramble the content packets relating to the event (e.g a broadcasted program or a set of programs). Conditional access messages include two kinds of information, namely Entitlement Control Messages (ECM) and Entitlement Management Messages (EMM). The ECM is information relating to content packets, whereas the EMM is information dedicated to an individual end user (subscriber) or a group of end users. The ECM contains the access conditions for the current broadcast event together with control word (CW) for unscrambling this event. The Control Word (CW) is a key used for decrypting content packets of a packetized event broadcasted within the data stream. Thus, each ECM is specific to each event (e.g. a TV program). The EMM is a message used by the security module to set, reset or change product access entitlements, credit, etc... Thus EMM refers to the rights (access data) of the subscriber for accessing to the content (events).

Until now, hybrid set-top-boxes (e.g. DTT+IPTV or SAT+IPTV boxes) used for receiving pay-TV contents were each provided with a security module for processing selective access to broadcast services on a per-subscriber basis managed by a conditional access system (CAS). Such a security module typically refers to a smart card (chip card) which can be inserted into a slot of a conditional access reader. This card reader can be connected to the multimedia unit or be lodged directly within this unit. Thus, the security module becomes a necessary device for decrypting the scrambled content packets of the digital transport stream. To this end, the conditional access messages contained in the transport stream are routed to the security module which posses the keys to decrypt the ECM in order to extract the control word (CW) which then will be used by a descrambling module (within the multimedia unit) for descrambling the content packets. This process is achieved only if the conditional access rights (provided by the EMM) are valid and checked by the security module.

In order to be compatible with non-IP broadcast networks (e.g. SAT, DTT), all hybrid multimedia unit suitable for receiving IPTV events comprise such a security module. The problem of such a solution is that it requires the implementation of a conditional access reader and the management of smart cards, comprising producing, delivery and updating of millions of cards.

Accordingly, there exists a need for simplifying the hybrid multimedia units of the prior art together with the method for descrambling a digital broadcast transport stream.

### SUMMARY OF THE INVENTION

In order to solve this problem, the present invention aims to suggest a cardless hybrid multimedia unit and a method for descrambling a digital broadcast transport stream by means of such a unit.

This aim is reached by a method to descramble a digital broadcast transport stream received, from a broadcaster (head-end) through a satellite, terrestrial, handheld or cable network, by a hybrid multimedia unit connectable to a server through an IP-connection provided with a return path. This transport stream comprises scrambled audio/video/data content packets, scrambled conditional access messages (ECM, EMM) and other packetized elements which are not important for understanding the present invention. The conditional access messages have to be processed to extract control data (CW) which are necessary for the multimedia unit to descramble the aforementioned content packets. This method comprises the steps of:
- authentication of the multimedia unit by the server; if this authentication fails, then any further processing by the server of conditional access messages (ECM, EMM) coming from any unauthenticated multimedia unit is prevented,
- establishing a secure session between the authenticated multimedia unit and the server in view of data transfer,
- sending these conditional access messages (ECM, EMM) from the authenticated multimedia unit to the server through the return path without having previously extracted said control data (CW),
- verifying the validity of access rights allocated to the multimedia unit by checking specific conditional access messages (EMM); if the allocated rights are not valid, then preventing any further processing of said control data (CW),
- extracting the control data (CW) from these conditional access messages (ECM) by the server,
- sending said control data (CW) from the server to the authenticated multimedia unit through the IP-connection implemented under the secured session,
- using said control data (CW) by the authenticated multimedia unit in order to descramble the audio/video/data content packets.

This aim is also reached by a hybrid multimedia unit comprising:
- means for receiving a digital broadcast transport stream which includes scrambled audio/video/data content packets and scrambled conditional access messages (ECM, EMM) sent by a broadcaster (head-end) through a satellite, terrestrial, handheld or cable network; the conditional access messages (ECM, EMM) containing control data (CW) which are necessary for descrambling the content packets,
- an interface for providing an IP-connection with a return path for connecting said multimedia unit to a server,
- means for authenticating the multimedia unit to the server,
- means for establishing a secure session for transferring data between the multimedia unit and the server,
- means for sending these conditional access messages (ECM, EMM) to the server through said return path,
- means for receiving said control data (CW) from the server through the IP-connection under the secured session,
- means for processing said control data (CW) in order to descramble the audio/video/data content packets.

### BRIEF DESCRIPTION OF THE DRAWINGS

The present invention will be better understood thanks to the attached figures in which:
Figure 1 shows a schematic overview of means for broadcasting a multimedia transport stream and a multimedia unit for receiving this transport stream via different types of possible networks.
Fig. 2a, Fig. 2b and Fig. 2c show a portion of the Fig. 1 according to different steps of the invention,
Fig. 3 is a schematic representation of a multimedia device according to the invention.

### DETAILED DESCRIPTION

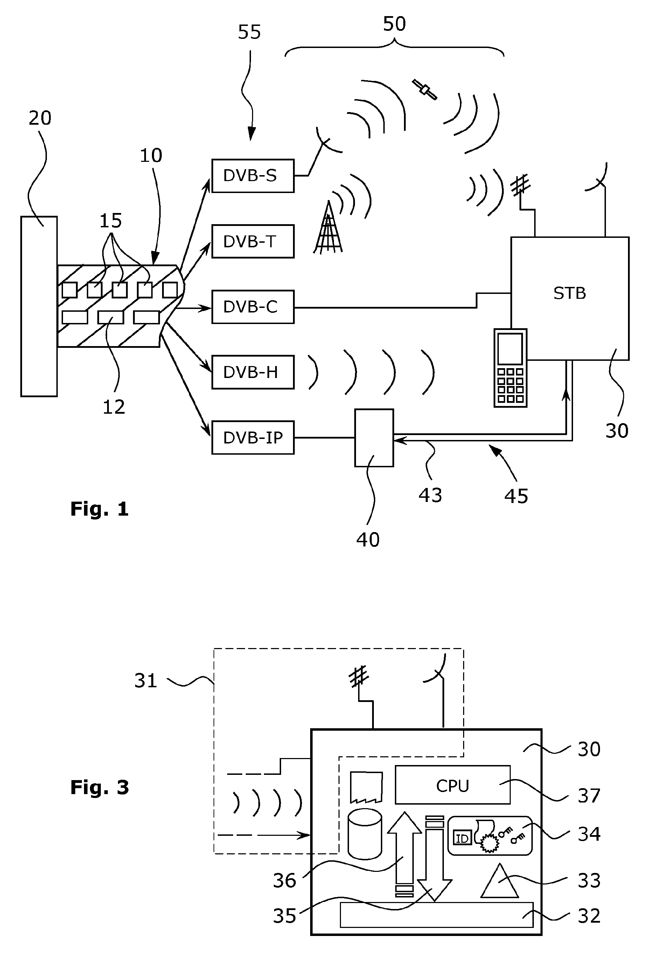

Referring to Fig. 1, it illustrates the general environment of the present invention in which at least one transport stream 10 of multimedia data (mainly audio/video data) is broadcasted by at least one broadcaster 20 (also denoted as being a head-end). This transport stream 10 is designated to be received by a multimedia unit 30, such as a set-top-box or a handheld device (e.g. a mobile phone) in view to be played/displayed on an appropriate means (e.g. TV or handheld display and/or audio means), connected to this multimedia unit. One of the features of the present invention, is that this multimedia unit is on the one hand connectable to a server 40 through an IP-connection 45 provided with a return path 43, and on the other hand connectable to at least one another type of networks 50 in view to receive data from at least one transport stream 10. This feature allows defining the multimedia unit 30 as a hybrid multimedia unit. Moreover, data may be supplied either by one transport stream or by transport streams from one or several head-ends.

Among these networks 50, the Fig. 1 schematically shows a satellite network, a terrestrial network, a cable network and a handheld network, each implemented by a modulator 55, respectively denoted DVB-S, DVB-T, DVB-C and DVB-H with reference to Digital Video Broadcasting Standards. Each modulator 55 is used for converting the incoming transport stream 10 into a modulated stream suitable for its transport towards the receivers. The designation DVB-IP refers to the Digital Video Broadcasting standard implying Internet Protocol and the designation DVB-H refers to mobile broadband Internet access for cellular phones including mobile TV receivers.

Within the context of a Pay-TV or any other paid service, the transport stream 10 is broadcasted in a scrambled form, so that only authorized end users (i.e. subscribers) are allowed to descrambled this stream for retrieving its original content (audio/video/data events). The scrambled transport stream 10 comprises a plurality of audio/video/data content packets 15 together with conditional access messages 12. A transport stream generally comprises several events, typically a plurality of TV programs of different channels. Each content packet 15 is attached to a certain event by means of a specific header. Each conditional access message 12 may comprise either an ECM (Entitlement Control Message) or an EMM (Entitlement Management Message) as already disclosed in the preamble of the present specification.

According to the present invention, the multimedia unit 30 is devoid of any security module (e.g. smart card) which usually is in charge of processing the access conditional message 12. These messages allow to verify the rights of the subscriber by processing the EMM and to descramble the content packets 15 after extracting the control word CW from the ECM. In the present invention, such processing is achieved by the server 40 in accordance with the following method.

The first step of the method of the present invention refers to the authentication of the multimedia unit 30 by the server 40. To this end, the server may have a register comprising identifier numbers (ID) of all multimedia units authorized to receive media services provided by this server through the IP network. Other manners of authentication can be implemented by the server; the purpose being to prevent any unauthorized multimedia unit to access the services of the server. If this authentication fails, then any access to the server by an unauthorized multimedia unit 30 for processing conditional access messages 12 will be denied.

Once identified as authorized multimedia unit, the second step of the method aims to establish a secure session between this multimedia unit and the server in view of data transferring. This step can be conducted in accordance with a common procedure, for instance by means of the ID of the multimedia unit, a certificate sent from the server to the multimedia unit with the server public key and a session key generated by the multimedia unit and sent to the server which is then able to decrypt it by means of its private key. Once the session key is known both by the server and by the multimedia unit, the secured session is established and data transfer can begin.

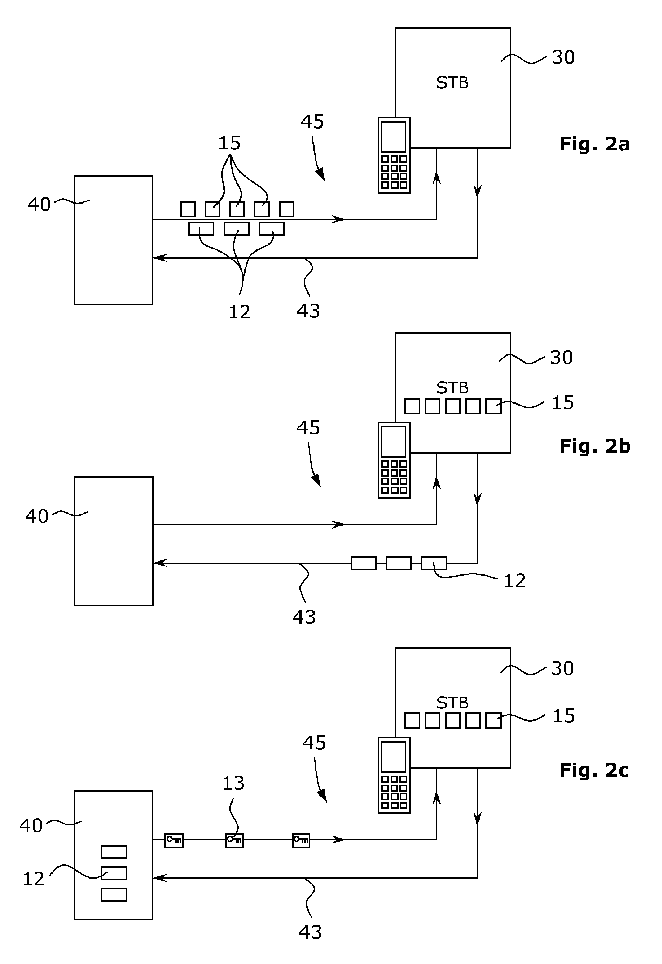

Referring to Fig. 2a, this first illustration shows the IP-connection 45 of Fig. 1 linking the multimedia unit 30 to the server 40. The latter sends the audio/video/data content packets 15 together with the conditional access messages 12 to the multimedia unit 30 through the download path of the secured IP-connection.

The main idea of the present invention is to keep the audio/video/data content packets 15 received by the multimedia unit 30, within it, and to use the return path 43 for sending back the conditional access messages 12 from the multimedia unit towards the server in order to process them by the latter. This is illustrated by Fig. 2b which shows the return of the conditional access messages 12 without having to be processed by the multimedia unit 30, i.e. without extracting the control words CW from these conditional access messages, in particular from the ECM.

The extraction of control data, in particular the extraction of control words CW, is achieved by the server 40 after having verified the validity of the subscriber rights contained in the EMM. This verification is also made on the server side, by means of the messages sent back by the multimedia unit.

As shown in Fig. 2c, the extracted control data 13 are sent by the server 40 towards the multimedia unit 30, via the secured channel 45. These control data include the control words CW which are used by the descrambler of the multimedia unit for descrambling the scrambled content packets 15. Then, these packets 15 are processed generally by an MPEG decoder (within the multimedia unit) before the output signal (clear and decompressed) can be played or displayed on an appropriate means for the end user.

From the foregoing, it should be noted that all the operations usually processed by the security module within the area of the multimedia unit are now advantageously moved to the server side. Owing to this embodiment, the present invention can suggest a cardless solution for processing a scrambled transport stream by using a simplified and cheaper hybrid multimedia unit. Advantageously, this solution no more requires the implementation of a security module such as smart card and card reader into or within the area of the multimedia unit. As a first result, the security of the multimedia unit is simplified given that the decryption of all condition access messages 12 is transferred from this unit to the server. Considering that this method and this concept can be applied to a huge number of multimedia units, the benefit to concentrate the deciphering operations at one place, namely on the secured server side, rather to process these operations within each multimedia unit, allows to considerably increase the security level of the whole system and render its managing more efficient and easy.

To implement the method of the present invention, Fig. 3 discloses a hybrid multimedia unit 30 comprising:
- receiving means 31 for receiving at least one digital broadcast transport stream 10 sent by at least one broadcaster 20 (head-end) through a satellite, terrestrial, handheld or cable network,
- an interface 32 for providing an IP-connection with a return path 43 for connecting the multimedia unit 30 to the server 40,
- authenticating means 33 for mutually authenticating the multimedia unit 30 and the server 40,
- securing session means 34 for establishing a secure session in view of transferring data between said multimedia unit 30 and the server 40,
- sending means 35 for sending conditional access messages 12 (ECM, EMM) to the server 40 through said return path 43 (without previously extracting the control data 13 from these messages 12),
- receiving means 36 for receiving the control data 13 (CW) from the server 40 through the IP-connection 45 under a secured session,
- processing means 37 for processing the control data 13 (CW) in order to descramble the audio/video/data content packets 15.

Other components, such as databases and other storing means could be obviously accommodated in the multimedia unit. However and in accordance to the invention, the hybrid multimedia unit 30 does not comprise any security module for processing the scrambled conditional messages 12 (EMM; ECM). Moreover, the multimedia unit 30 in not limited to a set-top-box but could be any other device able to process a digital transport stream such as pocket or tablet PC, personal assistant, game console, or smart phone for instance.

Although the server 40 is shown in the attached figures as an independent entity separated from the broadcaster 20, this server could be located within the broadcaster (head-end) or could be substituted by the latter.

Besides, although the conditional access messages 12 exchanged between the server and the multimedia unit are preferably sent back to the server through the secured IP-connection, it may be also possible to sent them through an unsecured channel. In contrast, sending of control data 13 will still be achieved through a secured channel.

Alternately, the return path 43 could be also implemented by using a modem and a telephone network or a cable return.

Another advantage of the present invention is that it becomes possible to easily check which program (event) is played or displayed by each multimedia unit. That allows introducing audience ratings, to track the behaviors of the subscribers and to prevent any control words sharing. Such control word sharing may be implemented by attackers by using an authorized multimedia unit with a packet sniffer (communication analyzer) for grabbing the control words and redistribute them, via internet, to unauthorized multimedia units.

The present invention also avoids the requirement of two multimedia units in parallel, one unit provided with a common security module for processing transport stream via a satellite, a terrestrial or a cable network and a second multimedia unit without said module but specifically dedicated to be connected to Internet network to benefit a hybrid reception.

## Claims

1. Method to descramble a digital broadcast transport stream (10) received, from a broadcaster (20) through a satellite, terrestrial or cable network (55), by an hybrid multimedia unit (30) connectable to a server (40) through an IP-connection (45) provided with a return path (43), said transport stream (10) comprising scrambled audio/video/data content packets (15) and scrambled conditional access messages (12), said conditional access messages (12) have to be processed to extract control data (13) which are necessary for the multimedia unit (30) to descramble said content packets (15), the method comprising the following steps:
- authentication of said multimedia unit (30) by the server (40), if said authentication fails, then prevent any further processing by the server (40) of conditional access messages (12) coming from any unauthenticated multimedia unit,
- establishing a secure session between said authenticated multimedia unit (30) and said server (40) for transferring data,
- sending said conditional access messages (12) from the authenticated multimedia unit to the server through said return path (43) without having previously extracted said control data (13),
- verifying the validity of access rights allocated to the multimedia unit (30) by checking specific conditional access messages; if said allocated rights are not valid, then preventing any further processing of said control data (13),
- extracting said control data (13) from said conditional access messages (12) by the server (40),
- sending said control data (13) from the server (40) to the authenticated multimedia unit (30) through said IP-connection (45) under said secured session,
- using said control data (13) by the authenticated multimedia unit (40) in order to descramble said audio/video/data content packets (15).

2. Method of claim 1, wherein said conditional access messages (12) comprise entitlement control messages and entitlement management messages, and said control data (13) are control words acting as keys for descrambling said content packets (15).

3. Method of claim 1 or 2, wherein said server (40) being comprised within said broadcaster (20).

4. Method of any of preceding claims, wherein sending said conditional access messages (12) from the authenticated multimedia unit (30) to the server (40) through said return path (43) is performed under said secured session.

5. Method of any of preceding claims, wherein said multimedia unit (30) is a set-top-box.

6. Hybrid multimedia unit (30) comprising:
- means (31) for receiving a digital broadcast transport stream (10) which includes scrambled audio/video/data content packets (15) and scrambled conditional access messages (12) sent by a broadcaster (20) through a satellite, terrestrial, handheld or cable network, said conditional access messages (12) containing control data (13) which are necessary for descrambling said content packets (15),
- an interface (32) for providing an IP-connection (45) with a return path (43) for connecting said multimedia unit (30) to a server (40),
- means (33) for authenticating said multimedia unit (30) to the server (40),
- means (34) for establishing a secure session for transferring data between said multimedia unit (30) and said server (40),
- means (35) for sending said conditional access messages (12) to the server (40) through said return path (43),
- means (36) for receiving said control data (13) from the server (40) through said IP-connection (45) under said secured session,
- means (37) for processing said control data (13) in order to descramble said content packets (15).
